(19) Europäisches Patentamt / European Patent Office / Office européen des brevets

(11) **EP 2 442 273 A1**

(12) **EUROPEAN PATENT APPLICATION**
published in accordance with Art. 153(4) EPC

(43) Date of publication:
**18.04.2012 Bulletin 2012/16**

(51) Int Cl.:
*G06T 7/00* (2006.01)     *G06F 17/30* (2006.01)
*G06T 1/00* (2006.01)

(21) Application number: **10786104.9**

(22) Date of filing: **02.06.2010**

(86) International application number:
**PCT/JP2010/059352**

(87) International publication number:
**WO 2010/143573 (16.12.2010 Gazette 2010/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **10.06.2009 JP 2009139148**

(71) Applicant: **Osaka Prefecture University Public Corporation Osaka 599-8531 (JP)**

(72) Inventors:
• **INOUE, Katsufumi**
 **Sakai-shi**
 **Osaka 599-8231 (JP)**
• **KISE, Koichi**
 **Sakai-shi**
 **Osaka 599-8231 (JP)**

(74) Representative: **Corret, Hélène**
 **Cabinet Orès**
 **36, rue de St Pétersbourg**
 **75008 Paris (FR)**

(54) **OBJECT IDENTIFICATION IMAGE DATABASE CREATING METHOD, CREATING APPARATUS AND CREATING PROCESS PROGRAM**

(57) The present invention aims to provide a method of compiling and retrieving an image database having excellent space efficiency, wherein an associative data structure is used in order to solve the foregoing problem.

There is provided a method including the steps of: an extracting step for extracting a plurality of feature vectors from an image formed by capturing an object to be stored into an image database, an n bit of identifier (n is a natural number) being previously assigned to the object and each feature vector representing a local feature of the image, and a storing step for storing each feature vector into the image database using a set of data structures, each data structure admitting a false positive in compensation for reduced memory amount and returning a value showing whether specified data is stored to the data structure or not, so that the identifier of the object is associated with the feature vector extracted therefrom, wherein the set of data structures has at least 2 by n identifier data structures, each identifier data structure corresponding to zero value and one value of each bit of the identifier, the storing step stores each feature vector into the identifier data structures of either zero value or one value of each bit according to the object from which the feature vector is extracted, the image database is accessed by a computer to execute, when an image showing an object is given as a query, a recognition process that examines whether the same object as the query is stored in the image database or not, wherein the recognition process includes steps of: extracting a plurality of feature vectors as query vectors from the query, testing whether the corresponding feature vector to each query vector is stored in the identifier data structures or not, and in case where the corresponding feature vector is stored in either zero value or one value of every bit of the identifier data structures, finding an identifier that relates to the query vector according to a stored value of each bit, so that the query is associated with the most strongly related identifier based on the sum of the tests on each query vector.

Fig.24

**Description**

**BACKGROUND OF THE INVENTION**

1. Field of the Invention

The present invention relates to a compiling method, a compiling apparatus, and a compiling program of image database used for object recognition. More specifically, the present invention relates to compress a representation of feature vectors and to an application to specific object recognition, wherein an associative data structure is used. The associative data structure admits a false positive, and when a certain data set and element are given, this data structure is used for associating a value assigned to each data (key) based upon the key.

2. Description of the Background Art

The specific object recognition is a task for recognizing an instance of an object. In the present specification, it is described a specific object recognition using a local feature vector such as SIFT (e.g., see Non-Patent Document 1).
Since there are a lot of objects around us, a technology of specific object recognition which allows us to recognize a large number of objects is required to provide a practical service. Local features are multidimensional and real-valued vectors. Since they have high discrimination power, they are suitable for recognizing many objects. As a specific object recognition method, a fundamental method is based on voting by matching feature vectors obtained from an unknown object and feature vectors obtained from an existing object. This method employs the nearest neighbor search of feature vectors for matching. This method poses the following problems caused by a large number of feature vectors. The most significant problem is involved with a processing speed and a memory amount.
Fortunately, many methods have already been proposed for the processing speed. Examples of these methods include a tree structure such as k-dimensional tree (see, for example, Non-Patent Document 1), and a method based upon a hash (see, for example, Patent Document 1, and Non-Patent Document 2). Approximate nearest neighbor search utilized in these methods enables us to improve the processing speed dramatically.
On the other hand, it is not easy to achieve the breakthrough for the problem of the memory amount. Hundreds to thousands of local features are generally extracted from a single image, and when the number of objects increases, a huge amount of memory is needed for their storage.
Some methods to reduce the amount of memory have already been proposed. For example, one of them is to reduce a required memory amount based upon vector quantized feature vectors called "Visual Words" (see, for example Non-Patent Document 3). This method is effective for "generic object recognition" for recognizing classes of objects (e.g., a category of a generic "car") in an image. However, it is not highly adaptable to the "specific object recognition" for recognizing an instance (e.g., a specific model name in the category of "car") of the object in the image. In order to realize a large-scale specific object recognition, the number of Visual Words has to be increased. However, in order to realize a large-scale recognition, only 2 to 3 feature vectors can be associated with one Visual Word. It has been reported that, if more than 2 or 3 feature vectors are associated with one Visual Word, a recognition rate is reduced (see the Non-Patent Document 4). Therefore, there is a limit of memory reduction with this method.
Another method is to reduce the memory amount by scalar quantization (see, for example, Non-Patent Document 5), or by selecting feature vectors (see, for example, Non-Patent Document 6, the Non-Patent Document 4). In these methods using the approximate nearest neighbor search, the distance calculation of the feature vectors is needed, so that an individual feature vector has to be stored in any cases. Therefore, they need the amount of memory proportional to the number of feature vectors to be stored, and there is a limit of memory reduction with these methods.
A possible approach to solve this problem is to skip the distance calculation for matching. With this, there is no need to store feature vectors, whereby a significant memory reduction can be realized. From this viewpoint, a hash-based method has been proposed in which feature vectors are stored in a hash table, and the hash table is accessed for recognition (see, for example, Patent Document 1, and the Non-Patent Document 2). In this method, matching of feature vectors is done through not a process of a similarity searching based upon the quantitative concept such as the distance and similarity but a process of identification as to whether they have the same hash functions (same hash values) or not. Since only the existence of feature vectors is marked in the hash table, a drastic memory reduction can be achieved.

**CITATION LIST**

**PATIENT DOCUMENT**

Patent Document 1: International Publication No. 2008/026414 Pamphlet

**NON-PATENT DOCUMENT**

Non-Patent Document 1: D. Lowe: "Distinctive Image Features from Scale-Invariant Keypoints", International Journal of Computer Vision, Vol. 60, No. 2, pp. 91-110 (2004)
Non-Patent Document 2: Kazuto Noguchi, Koichi Kise, Masakazu Iwamura: "Efficient Recognition of Objects by Cascading Approximate Nearest Neighbor Searches", Meeting on Image Recognition and Understanding (MIRU2007), OS-B2-02, pp. 111-118 (2007)
Non-Patent Document 3: K. Kise, K. Noguchi and M. Iwamura: "Memory Efficient Recognition of Specific Objects with Local Features", Proc. Of the 19th International Conference of Pattern Recognition (ICPR2008) WeAT3.1 (2008)
Non-Patent Document 4: Katsufumi Inoue, Hiroshi Miyake, Koichi Kise: "A Memory Reduction Method for 3D Object Recognition based on Local Descriptors - An Approach by Selecting Local Descriptors- ", Meeting on Image Recognition and Understanding (MIRU2008), OS15-3, pp. 363-370 (2008)
Non-Patent Document 5: Takayuki Hondo, Koichi Kise: "Inspection of Memory Reduction Methods for Specific Object Recognition ～ Approaches by Quantization and Selection of Local Features～", Technical Report of The Institute of Electronics, Information, and Communication Engineers, vol. 108, No. 484, PRMU2008-265, pp. 171-176 (2009)
Non-Patent Document 6: B. Chazelle, J. Kilian, R. Rubinfeld and A. Tal: "The Bloomier Filter: An Efficient Data Structure for Static Support Lookup Table", Proc. 15th Annual ACM-SIAM SODA, pp. 30-39 (2004)

## SUMMARY OF THE INVENTION

### TECHNICAL PROBLEM

However, this method still has a problem about the amount of memory. In order to achieve correct recognition, the similar feature vectors have to have the same hash values. However, with this, the feature vectors stored to the hash table are biased, and almost all bins in the hash table are typically empty. Therefore, the space efficiency, i.e., the ratio of the memory areas effectively utilized in the memory space is deteriorated.

The present invention is accomplished in view of the above-mentioned circumstances, and aims to provide a method of compiling and retrieving an image database having excellent space efficiency, wherein an associative data structure is used in order to solve the foregoing problem. The associative data structure provides a value to which a "key" serving as an element of a data set is assigned based upon the key. The associative data structure includes a data structure that admits a false positive as a trade-off of compressing data amount, i.e., of reducing a memory amount needed for storage of data and achieving high space efficiency. The data structure is used to check (retrieve) whether a certain key is stored or not among stored many keys. The false positive means that a value not assigned to the key may be returned during the retrieval, or a value may be returned, although the key is not stored. From this viewpoint, this data structure can be said to be probabilistic data structure. Even if there is no security that a correct answer can be obtained, and an erroneous result might be returned, it is OK that the probability of the erroneous result is low to such a degree that there is no problem on practical use. The admission of the false positive is one of options for reducing the amount of memory needed for compiling the database.

Instead of the hash table, the data structure described above is used to check whether a feature vector is stored or not. The great difference is that a false positive occurs in which a feature vector, which is not stored, is erroneously detected. In the method of using the hash table, the false positive cannot occur. On the other hand, in the method of using the data structure described above, a high space efficiency can be realized, although a false positive is allowed to some extent.

### SOLUTION TO PROBLEM

The present invention provides a compiling method of an image database used for object recognition, the method including the steps of: an extracting step for extracting a plurality of feature vectors from an image formed by capturing an object to be stored into an image database, an n bit of identifier (n is a natural number) being previously assigned to the object and each feature vector representing a local feature of the image, and a storing step for storing each feature vector into the image database using a set of data structures, each data structure admitting a false positive in compensation for reduced memory amount and returning a value showing whether specified data is stored to the data structure or not, so that the identifier of the object is associated with the feature vector extracted therefrom, wherein the set of data structures has at least 2 by n identifier data structures, each identifier data structure corresponding to zero value and one value of each bit of the identifier, the storing step stores each feature vector into the identifier data structures of either zero value or one value of each bit according to the object from which the feature vector is extracted, the image database is accessed by a computer to execute, when an image showing an object is given as a query, a recognition process that examines whether the same object as the query is stored in the image database or not, wherein the recognition process comprises steps of: extracting a plurality of feature vectors as query vectors from the query, testing whether the corresponding feature vector to each query vector is stored in the identifier data structures or not, and in case where the corresponding feature vector is stored in either zero value or one value of every bit of the identifier data structures, finding an identifier that relates to the query vector according to a stored value of each bit, so that the query is associated with the most strongly related identifier based on the sum of the tests on each query vector.

From another aspect, the present invention provides a compiling apparatus of an image database used for object recognition, the apparatus including: an extracting unit for extracting a plurality of feature vectors from an image formed by capturing an object to be stored into an image database, an n bit of identifier (n is a natural number) being previously assigned to the object and each feature vector representing a local feature of the image, a data structure unit that includes a set of data structures, each data structure admitting a false positive in compensation for reduced memory amount and returning a value showing whether specified data is stored to the data structure or not, and a storing unit for storing each feature vector into the data structure unit in such a manner that the identifier previously assigned to the object is associated with the feature vector extracted therefrom, wherein the data structure unit has at least 2 by n identifier data structures, each identifier data structure corresponding to zero value and one value of each bit of the identifier, the storing unit stores each feature vector into the identifier data structures of either zero value or one value of each bit according to the object from which the feature vector is extracted, the image database is accessed by a recognition apparatus that, when an image showing an object is given as a query, examines whether the same object as the query is stored in the image database or not, and the recognition apparatus extracts a plurality of feature vectors as query vectors from the query, tests whether the corresponding feature vector to each query vector is stored in the identifier data structures or not, and in case where the corresponding feature vector is stored in either zero value or one value of every bit of the identifier data structures, finds an identifier that relates to the query vector according to a stored value of each bit, so that the query is associated with the most strongly related identifier based on the sum of the tests on each query vector.

Further, the present invention provides a compiling program of an image database used for object recognition, the program allowing a computer to execute steps of: an extracting step for extracting a plurality of feature vectors from an image formed by capturing an object to be stored into an image database, an n bit of identifier (n is a natural number) being previously assigned to the object and each feature vector representing a local feature of the image, and a storing step for storing each feature vector into the image database using a set of data structures, each data structure admitting a false positive in compensation for reduced memory amount and returning a value showing whether specified data is stored to the data structure or not, so that the identifier of the object is associated with the feature vector extracted therefrom, wherein the set of data structures has at least 2 by n identifier data structures, each identifier data structure corresponding to zero value and one value of each bit of the identifier, the storing step stores each feature vector into the identifier data structures of either zero value or one value of each bit according to the object from which the feature vector is extracted, the image database is accessed by the computer or another computer to execute, when an image showing an object is given as a query, a recognition process that examines whether the same object as the query is stored in the image database or not, wherein the recognition process comprises steps of: extracting a plurality of feature vectors as query vectors from the query, testing whether the corresponding feature vector to each query vector is stored in the identifier data structures or not, and in case where the corresponding feature vector is stored in either zero value or one value of every bit of the identifier data structures, finding an identifier that relates to the query vector according to a stored value of each bit, so that the query is associated with the most strongly related identifier based on the sum of the tests on each query vector.

## EFFECT OF THE INVENTION

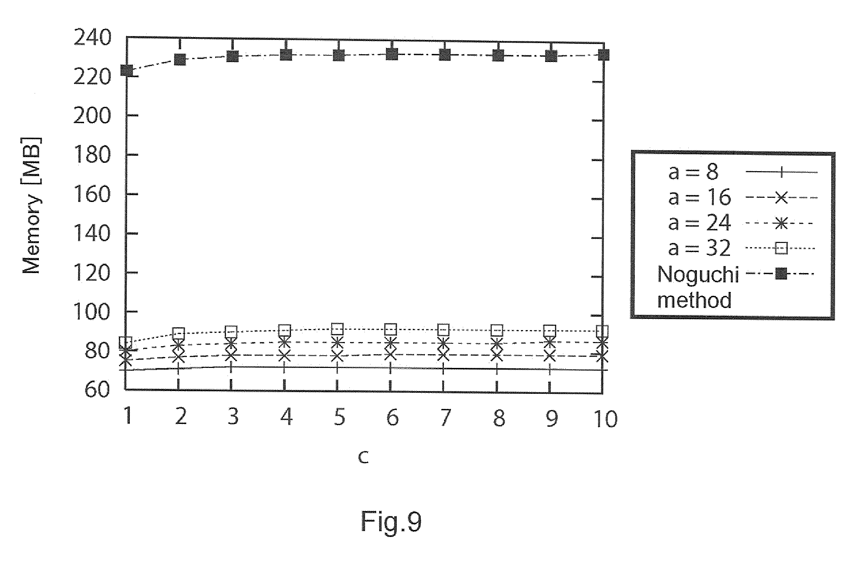

In the compiling method of an image database used for object recognition, in the storing step, the feature vector is stored into the 2 x n identifier data structures of either zero value or one value of each bit according to the object from which the feature vector is extracted. Therefore, the value of the identifier can be associated from the feature vector based upon the data structure to which the feature vector is stored, i.e., by checking whether the corresponding feature vector is stored in the data structure for zero value or the data structure for one value. The data structure admits the false positive in order to compress the data amount. Therefore, a large-scale object recognition image database can be realized with the memory amount almost the same as that in the conventional method. As illustrated in FIGS. 9, 10, 15, and 16 described later, it can be verified from experiments that the present invention can reduce an amount of memory, compared to the approximate nearest neighbor search using the hash table.

In the present invention, a specific example applicable as the data structure is a Bloom filter, and a specific example applicable as the associative data structure is a Bloomier filter (see, for example, the Non-Patent Document 6). The Bloomier filter is a data structure known as a method for associating values, which are respectively assigned to plural keys serving as an element to be stored, based upon the corresponding key. The association means that, when a certain key is given, a value associated with the key can be obtained in a short period according to a predetermined data structure. To associate means to obtain the value associated with the key with this strategy. The Bloomier filter contains plural Bloom filters (a bit array of m bits) having plural common hash functions. When a certain key is given, each Bloom filter is referred to by using the hash value obtained from each hash function, and the value associated with the key can be obtained based upon the reference result. The detail will be described later.

An image representing an object is stored to the image database for the object recognition according to the present invention, and a query is given as an image. If the object matching the object represented by the image of the query can be found from the database, it can be said that the object can be recognized.

In the object recognition, it is important to complete the object recognition in a short period, and to realize an image database with reduced memory. The relation between them is frequently a trade-off. The memory reduction is rather an emphasis in the present invention. Specifically, it is an effective method for constructing the image database to which a large number of image data is stored.

The operation and effect described above are similarly applied to the compiling apparatus and compiling program of an image database for object recognition according to the present invention.

## BRIEF DESCRIPTION OF THE DRAWINGS

FIG. 1 is an explanatory view illustrating a cascaded structure having cascaded plural recognizers in order to shorten a recognition time in a conventional object recognition.

FIG. 2 is an explanatory view illustrating a flow of a storage process to a Bloom filter according to the present invention.

FIG. 3 is an explanatory view illustrating examples of 3D objects used in an experiment according to the present invention.

FIG. 4 is an explanatory view illustrating examples of planar objects used in an experiment according to the present invention.

FIG. 5 is an explanatory view illustrating images used as a query in the experiment of the present invention, wherein each image is captured by changing an angle of view of each planar object.

FIG. 6 is a first graph illustrating a recognition rate of an object when various parameters are changed in the method of the present invention and in the Noguchi method that is the comparative example (Experiment 1, Recognition experiment of 55 3D objects).

FIG. 7 is a second graph illustrating a recognition rate of an object when various parameters are changed in the method of the present invention and in the Noguchi method that is the comparative example (Experiment 1, Recognition experiment of 55 3D objects).

FIG. 8 is a third graph illustrating a recognition rate of an object when various parameters are changed in the Noguchi method that is the comparative example (Experiment 1, Recognition experiment of 55 3D objects).

FIG. 9 is a first graph illustrating a result of comparison in an amount of memory required for the recognition process by changing a parameter c between the method in the present invention and the Noguchi method that is the comparative example (Experiment 1, Recognition experiment of 55 3D objects).

FIG. 10 is a second graph illustrating a result of comparison in an amount of memory required for the recognition process by changing the parameter c between the method in the present invention and the Noguchi method that is the comparative example (Experiment 1, Recognition experiment of 55 3D objects).

FIG. 11 is a graph illustrating a recognition rate by changing a parameter t in the method of the present invention (Experiment 1, Recognition experiment of 55 3D objects).

FIG. 12 is a first graph illustrating a recognition rate of an object when various parameters are changed in the method of the present invention and in the Noguchi method that is the comparative example (Experiment 2, Recognition experiment of 5,000 planar objects).

FIG. 13 is a second graph illustrating a recognition rate of an object when various parameters are changed in the method of the present invention and in the Noguchi method that is the comparative example (Experiment 2, Recognition experiment of 5,000 planar objects).

FIG. 14 is a third graph illustrating a recognition rate of an object when various parameters are changed in the Noguchi method that is the comparative example (Experiment 2, Recognition experiment of 5,000 planar objects).

FIG. 15 is a first graph illustrating a result of comparison in an amount of memory required for the recognition process by changing the parameter c between the method in the present invention and the Noguchi method that is the comparative example (Experiment 2, Recognition experiment of 5,000 planar objects).

FIG. 16 is a second graph illustrating a result of comparison in an amount of memory required for the recognition process by changing the parameter c between the method in the present invention and the Noguchi method that is the comparative example (Experiment 2, Recognition experiment of 5,000 planar objects).

FIG. 17 is a graph illustrating the recognition rate and the processing time by changing parameters b and c with d = 28 and d = 24 in the method of the present invention and in the Noguchi method that is the comparative example, wherein the memory of the same size is employed (Experiment 2, Recognition experiment of 5,000 planar objects).

FIG. 18 is a graph illustrating the recognition rate of an object by changing the parameter t in the method of the present invention (Experiment 2, Recognition experiment of 5,000 planar objects).

FIG. 19 is a first graph illustrating effectiveness of a Bloomier filter for an error detection in the method of the present invention (Recognition experiment of 55 3D objects).

FIG. 20 is a second graph illustrating effectiveness of the Bloomier filter for an error detection in the method of the present invention (Recognition experiment of 55 3D objects).

FIG. 21 is a third graph illustrating effectiveness of the Bloomier filter for an error detection in the method of the present invention (Recognition experiment of 5,000 planar objects).

FIG. 22 is a fourth graph illustrating effectiveness of the Bloomier filter for an error detection in the method of the present invention (Recognition experiment of 5,000 planar objects).

FIG. 23 is a first explanatory view for describing a specific example of a compiling method of a database according to the present invention.

FIG. 24 is a second explanatory view for describing a specific example of a compiling method of a database according to the present invention.

## DESCRIPTION OF THE PREFERRED EMBODIMENTS

Preferable embodiments of the present invention will be described below.

In the compiling method of image database for object recognition according to the present invention, each data structure may admit the false positive in order to reduce an amount of memory storing data.

The storing step may apply a predetermined rule so as to obtain a value for an error detection involved with the identifier, and may store the obtained value to the data structure for the error detection, and the recognition step may compare the obtained identifier and the value stored to the data structure for the error detection, and when they agree with each other, the recognition step may use the determination result about the query vector for the sum of the tests, while if they do not agree with each other, it may not use for the sum of the tests. Specifically, the storing step applies a predetermined rule so as to obtain a value for an error detection involved with the identifier, and stores the obtained value to the data structure for the error detection. Therefore, even if it is determined that the query vector is stored to both a zero value and one value of a bit, the consistency with the value stored to the data structure for the error detection is determined. Accordingly, an image related to the query vector can be found with higher accuracy than in the case of not using the data structure for the error detection.

The value for the error detection may include at least one bit, and the data structure for the error detection may include a data structure for a storage of zero value of the bit, and a data structure for a storage of one value of the bit. By virtue of this structure, the data structure for the detection can be configured to include the data structure described above in addition to the associative data structure for associating the identifier by using 2 x n data structures.

When the number of bits, by which it is determined that the same query vector is stored in both the data structure for the zero value and the data structure for the one value due to the false positive, exceeds a predetermined number, the recognition step may exclude the determination result involved with the query vector from the sum of the tests. When a value exceeding a predetermined number is obtained as the identifier of the image related to the query vector due to the false positive, the determination result containing many erroneous values is excluded from the specific basis. With this, the image related to the query vector can be found with higher accuracy than in the case where the determination result described above is not excluded.

The recognition step may give a predetermined point to the value of the identifier that is determined to be related to the query vector, while it may not give a point to any identifiers when there is no identifier that is determined to be related to the query vector, and may determine the identifier with the highest points based upon the sum of the tests for the query vectors extracted from the query. The voting process for casting votes to the plural determination results of the query vector is carried out. Therefore, even if the probability that the individual determination result is correct is not 100%, a valid result can be obtained by the voting process.

The data structure may be a Bloom filter.

In the compiling method and retrieval method described above, a number m (m is a natural number) of bits for each data structure may be larger than the predetermined maximum number of stored vectors. More preferably, m is determined such that each data structure after the storage of each vector becomes adequately coarse including a bit of zero value. This structure can reduce the probability of the erroneous detection of the data structure, i.e., reduce a risk of false positive. When m is increased too much, the space efficiency is deteriorated. A designer may experimentally or experientially decide a valid value from the balance between them.

The various preferable embodiments described here can be combined to one another.

The present invention will be described in detail with reference to the drawings. The description below should be considered in all respects as illustrative and not restrictive of the present invention.

Before describing the present invention in detail, a related work will be described in some detail for easy understanding of the technical meaning of the present invention.


1. Related Work

A reduction in a memory amount is a significant problem in a specific object recognition using a local feature vector. Conventional techniques of reducing the memory amount include a technique based upon a vector quantization of a feature vector (see the Non-Patent Document 7), or a technique based upon a scalar quantization (see the Non-Patent Document 3).

In the former technique based upon the vector quantization, plural feature vectors are converted into a representative vector called Visual Word so as to reduce a memory amount. However, in order to realize a large-scale recognition, only a few feature vectors can be associated with one Visual Word. It has been reported that, if more than 2 or 3 feature vectors are associated with one Visual Word, a recognition rate is reduced (see the Non-Patent Document 5).

On the other hand, in the latter technique based upon the scalar quantization, the memory amount is reduced by scalar quantization for each dimension of the feature vector. This technique is effective for a large-scale object recognition to a certain degree. However, even if the number of the feature vectors is represented by 1 bit, the memory amount increases in proportion to the number of the feature vectors, so that there is a limit to perform a more large-scale object recognition. Therefore, there is a limit on the technique of reducing a capacity of the feature vector itself.

Another approach to the reduction is to use not main memory but an auxiliary storage (e.g., see F. Fraundorfer, H. Stewenius and D. Nister: "A Binning Scheme for Fast Hard Drive Based Image Search", Proc. of CVPR2007, pp. 1-6 (2007), or Noritaka Himei, Toshikazu Wada: "Approximate nearest neighbor search algorithm on HDD based on B+ tree", IEICE, Vol. 108, No. 484, PRMU2008-273, pp. 223-228 (2009)). There is another technique of sampling feature vectors stored in a database (see, for example, the Non-Patent Documents 5 and 4).

In the technique of utilizing the auxiliary storage, the strategy is to store only a pointer to feature vector in the main memory so as to reduce the memory amount. This technique can realize a large-scale object recognition, but entails a problem of taking much time for a recognition process.

In the technique of sampling feature vectors, feature vectors effective for the recognition are selected so as to reduce the memory amount. Even in this technique, there is a limit on the number of the feature vectors that can be reduced for realizing a large-scale object recognition. When the feature vectors more than the limit are to be reduced, the recognition rate might be reduced.

In each of the above-mentioned techniques, an individual feature vector has to be stored in order to calculate the distance of the feature vector. Therefore, there is a limit to reduce the memory amount necessary for the recognition.

As one approach for solving this problem, it is considered that the calculation of the distance of the feature vector is skipped. A technique (see the Patent Document 1, the Non-Patent Document 2) of using a hash table has been proposed as the technique based upon this concept. However, this technique also has a problem. Specifically, the feature vectors stored on the hash table are biased, wherein most bins of the hash table are empty, which means the space efficiency is poor. In view of this, the present invention provides a technique of reducing a memory amount by using Bloomier filter having excellent space efficiency, compared to the hash table, based upon the concept of not performing the distance calculation of the feature vector.


2. Noguchi method

A Noguchi method (see the Patent Document 1, the Non-Patent Document 2) that is the basis of the present invention will be described in this section. The Noguchi method is a specific object recognition process, wherein the number of dimensions of feature vectors is 36. The feature vectors are calculated by PCA-SIFT (e.g., see Y. Ke and R. Sukthankar: "PCA-SIFT: A more distinctive representation for local image descriptors", Proc. Of CVPR2004, Vol. 2, pp. 506-513 (2004)). The Noguchi method is classified into two processes, which are a process of constructing a database for storing feature vectors on the hash table, and a recognition process for recognizing an object based upon a voting process by using this database. The specific process will be described below.


2.1 Database construction

In this section, the process of database construction in the Noguchi method will be described. In the Noguchi method, one dimension to d-dimension ($d \leq 36$) of a feature vector p are extracted to create $p' = (p_1, p_2, ..., p_d)$. Then,

a bit vector u = (u$_1$, ..., u$_d$) obtained by binarizing each dimension is created by using the vector p'.
[Equation 1]

$$u_j = \begin{cases} 1 & \text{if } p_j \geq 0 \\ 0 & \text{otherwise} \end{cases} \qquad (1)$$

[Equation 2]

$$H_{\text{index}} = \left( \sum_{j=1}^{d} u_j 2^{(j-1)} \right) \bmod H_{\text{size}} \qquad (2)$$

Next, an index that is to be stored in the hash table is obtained from a hash function of [Equation 2]. $H_{size}$ indicates a size of the hash table. An ID of the object from which the feature vector p is extracted is stored in the obtained index. The object ID corresponds to an "identifier" in the present invention.

In the Noguchi method, when a collision occurs during the storage of the feature vectors, the feature vectors are stored as a list. It is to be noted that, in order to reduce a calculation cost, a threshold value c is set to a list length, and when the list length becomes longer than c, the whole list is deleted from the hash table, and the storage afterward is inhibited. This is based upon a concept that the feature vectors, having the same hash value, do not contribute much to the object recognition, since they are very similar to each other. The process described above is executed to all feature vectors so as to create the database.

2-2 Recognition process

In the Noguchi method, a feature vector obtained from a query image by PCA-SIFT is used so as to obtain an index of the hash table, as in the database construction process. A voting is made to all object IDs stored in the obtained hash index. This process is executed to all feature vectors obtained from the query image, and an object having the highest vote is finally defined as the result of the recognition. The specific process will be described below.

The index of the hash table is firstly obtained from the feature vector extracted from the query image. In this case, there arises a problem described below according to a characteristic of the hash function used in the Noguchi method. Since a situation in which a query image and an image of the database are totally the same hardly occurs, the value of each dimension of the feature vector extracted from the query image becomes different from that of the feature vector used for creating the database. If it is converted into a different bit vector due to this factor, a correct object ID cannot be retrieved from the hash table. In order to cope with this problem, an allowable error range e is set to the value of each dimension. Specifically described, in the feature vector q = (q$_1$, q$_2$, ... q$_d$) that is to become a query, a feature vector is retrieved by using not only u$_j$ but also [Equation 4] with respect to the dimension j satisfying [Equation 3].
[Equation 3]

$$|q_j| \leqq e$$

[Equation 4]

$$u'_j = (u_j + 1) \bmod 2 \quad (\text{ if } 0, 1, \text{ and if } 1, 0 \text{ })$$

For example, when the third dimension of the bit vector u' = (1, 0, 0, 1) is the subject to be processed, the feature vector is retrieved by using also u' = (1, 0, 1, 1). However, when this process is made to all dimensions, the processing time becomes enormous. Therefore, a threshold value b is set to the number of dimensions that is the subject to be processed. With this process, the number of the bit vectors u' used for the retrieval process is at most $2^b$.
[Equation 5]

$$|q_j| \leqq e$$

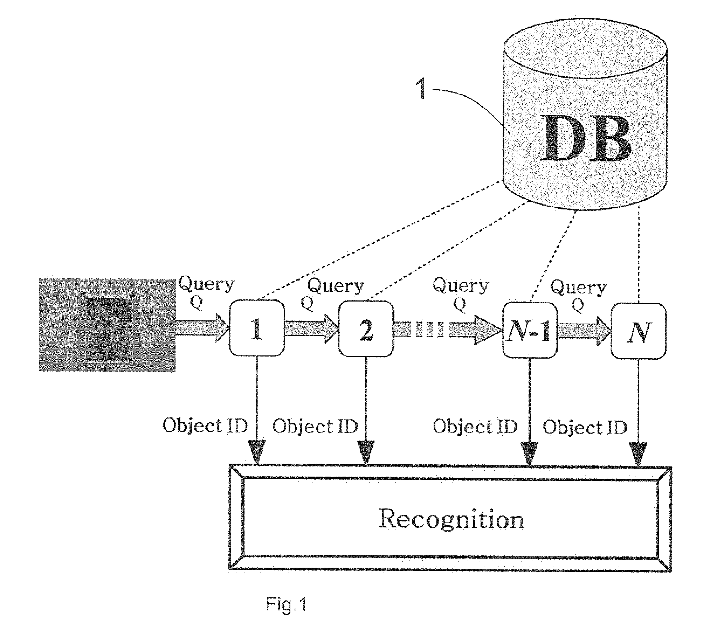

When the number of dimensions satisfying [Equation 5] exceeds the limit b, those with larger indices are adopted up to the limit b.
With this process, a voting is done to the object IDs stored in the hash table, and the object having the highest vote is defined as the result of the recognition.
In the Noguchi method, plural recognizers are cascaded as illustrated in FIG. 1 in order to enhance efficiency of the process. The cascade configuration can also be applied to the present invention. A recognizer with b = s- 1 is used at the sth stage. A process when a query image is checked by the recognizer will specifically be described. At the first stage, a bit vector with b = 0 is used for recognition. In this case, if the difference between the number of votes of the object having the highest vote and the number of votes of the other objects is greater enough, the object with the highest vote at this point is outputted as the result of the recognition. If the sufficient difference in the number of votes is not obtained, the recognizer at the next stage is applied, wherein a bit vector with b = 1 is used for recognition. This process is repeated so as to recognize the query image. The feature of the recognition process using plural recognizers is such that this process has a property called difference accessibility in which, when the recognizer at the next stage is applied, a bit vector that is other than the bit vector used for the retrieval process at the previous stage is used for recognition. Therefore, even when the last recognizer is employed, the recognition can be made with the processing time almost equal to the processing time for the recognition using $2^b$ bit vectors from the beginning.

2-3. Problem in Noguchi method

In the Noguchi method, the value of the dimension d of the bit vector has to be increased in order to achieve high accuracy in the recognition rate. However, when the value of d increases, the size of the hash table also exponentially increases.
When about 10 million feature vectors calculated by PCA-SIFT were mapped on the hash table according to the Noguchi method in a preliminary experiment with $H_{size} = 2d$, it was found that more than 65% hash indexes in the case of d = 24 and more than 96% hash indexes in the case of d = 28 corresponded to none of the feature vectors, or were deleted from the list. From the above, the Noguchi method has a room for improvement from the viewpoint of the space efficiency of the hash table.

In order to solve this problem, the present invention uses a data structure having better space efficiency than the hash table, wherein a false positive is admitted in order to compress the capacity of the data. A specific example of the data structure is a Bloom filter, and a specific example of the associative data structure is a Bloomier filter.

## 3. Bloom filter and Bloomier filter

In this section, the Bloomier filter (see the Non-Patent Document 6) that can be applied as the associative data structure according to the present invention and the Bloom filter (see, for example, B. H. Bloom: "Space/Time Trade-offs in Hash Coding with Allowable Errors", Commun. ACM, Vol. 13, No. 7, pp. 422-426 (1970)) that is the basis of the Bloomier filter will be described.

### 3-1. Bloom filter

The Bloom filter is a data structure having more excellent space efficiency compared to a self-balancing binary search tree or the hash table. When a certain data set and element are given, the Bloom filter is used for checking whether this element is a member of the data set or not. This technique entails a problem that a possibility of a false positive, in which a certain element is determined to be a member of the set, although it is not a member of the data set, becomes high, or a problem that an original element cannot be removed from the data set. On the other hand, this technique has an advantage that some number of elements can be added to the data set without increasing the memory amount. The more the elements are added, the higher the possibility of the false positive becomes. However, the number of the elements that can be stored with the same memory amount is predominantly large, compared to the self-balancing binary search tree or the hash table.

In the present invention, the Bloom filter is used for a compressed representation of a feature vector by utilizing an excellent space efficiency. In the present specification, it is supposed below that an element of the data set is a feature vector. Specific processes of a method of storing a feature vector to the Bloom filter and a recognition method of a feature vector will be described below.

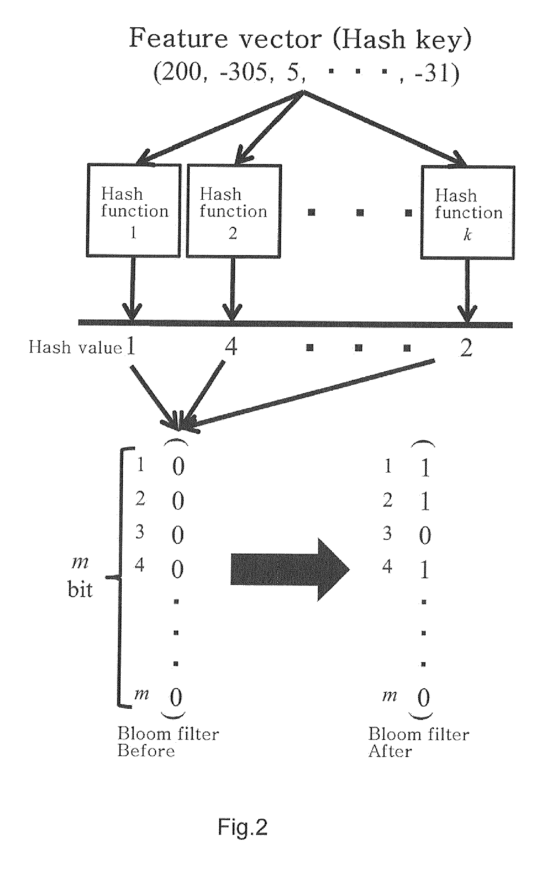

FIG. 2 illustrates a flow of a process of storing a feature vector. Firstly, an empty Bloom filter that is a bit array of m bits is prepared, and all bits are initialized to zero. Hereinafter, m is referred to as "Table Size". Next, k hash functions are prepared, and a hash value is calculated for each hash function with a feature vector defined as a key. The hash values obtained here are supposed to assume an integer within a range of 1 to m. The $x_i$th (i = 1, 2, ..., k) bit of the Bloom filter is set to be 1 based upon the obtained k hash values $X_1$, $X_2$, ..., $X_k$, whereby the feature vector is stored. As in the retrieval process, hash values are obtained from each hash function with the feature vector being defined as a key in the recognition process of the feature vector. If all bits corresponding to the obtained hash values are 1, it is determined that the data set includes the feature vector.

### 3-2. Bloomier filter

In the present invention, the Bloomier filter is a data structure used for an association of a value related to the stored feature vector by using plural Bloom filters. This technique also entails a problem of a possibility of a false positive, and a problem that the original feature vector cannot be removed from the data set. However, this technique has an advantage that the space efficiency is predominantly excellent, compared to the hash table. The present invention utilizes the Bloomier filter for a specific object recognition by using this property. The operation of the Bloomier filter will specifically be described below.

It is firstly described that the values associated by the Bloomier filter are only two types, which are 0 and 1. Firstly, two Bloom filters X and Y are prepared. The feature vectors whose associated value is 0 are added to the Bloom filter X, while the feature vectors whose associated value is 1 are added to the Bloom filter Y. If a certain feature vector, which is to be recognized, is contained in the Bloom filter X, the probability that the associated value is 0 is high, and if it is contained in the Bloom filter Y, the probability that the associated value is 1 is high.

It is considered in the present invention that object IDs used for a recognition of a specific object are associated with the use of the operation of the Bloomier filter described above. Supposing that an object ID is represented by n bits, the Bloomier filter consisting of 2n Bloom filters for each bit is prepared. In order to recognize N objects, N Bloom filters have to be required for each of N objects. However, if the Bloomier filter is used, an object can be recognized with $\log_2 N$ Bloom filters.

## 4. Method of present invention

In this section, the method of recognizing a specific object using the Bloomier filter will be described. Like the Noguchi method, feature vectors calculated by PCA-SIFT from an image are used. A compiling method of a database for storing a feature vector to the Bloomier filter will firstly be described. Next, an object recognition method using the Bloomier filter will be described.

4-1. Database compilation

In this section, the method of compiling a database for storing a feature vector to the Bloomier filter will be described. When it is supposed that an object ID used for the recognition of an object is represented by n bits, 2n Bloom filters are prepared. Let $X_1$, $X_2$, ..., $X_n$ be the Bloom filters whose associated value is 0 and $Y_1$, $Y_2$, ..., $Y_n$ be those whose associated value is 1. The Table Size of each Bloom filter is calculated as [Equation 6].
[Equation 6

$$a \times M_f^g [bit] \qquad (3)$$

Here,

[Equation 7]

$$M_f^g (f \in \{0,1,...,n\}, g \in \{0,1\})$$

is the total number of feature vectors whose fth bit of object ID is g, and a means how many bits are employed for storing one feature vector.
In the case of the Bloom filter $X_i$, for example, M means the number of feature vectors obtained from objects whose ith bit of object ID is 0, when the object ID is represented by bits.
Hence, the Table Size of $X_i$ is as follows.

[Equation 8]

$$a \times M_i^0 \qquad (4)$$

Feature vectors are stored to n Bloom filters in order to associate the object ID. Supposing that the object ID 3 is represented as "10" when the object ID is represented by 2 bits. Because the first bit of the object ID 3 is 1 and the second bit is 0, the feature vectors extracted from the object whose ID is 3 are stored to the Bloom filters $Y_1$ and $X_2$. The specific process will be described below.
As in the Noguchi method, the bit vector u is created by using d dimension of the feature vector. If the number of feature vectors stored to the database and converted into the same bit vector exceeds the threshold c, these feature vectors converted into the bit vector are considered not to be valid so much for the recognition, so that they are not stored to the database. In other cases, k hash functions are applied to determine which bit of the Bloom filter is 1 with the obtained bit vector u being defined as a key.
In the present embodiment, k is set to be 8, and 8 hash functions proposed in General Purpose Hash Function Algorithms, [online], searched on June 3, 2009, <URL:

http://www.partow.net/programming/hashfunctions/index.html#RSHas hFunction.> on Internet are used. They are only illustrative, and any other hash functions may be used.

The process mentioned above is applied to all feature vectors to compile the database. In the present invention, the original feature vector cannot be taken out of the database, but the amount of memory for storing feature vectors is less than that with the conventional method, in which the original feature vector is stored as it is, because the property of the Bloomier filter.

4-2. Object recognition

In this section, the object recognition method by using the Bloomier filter will be described. The flow of the process of the proposed object recognition method will firstly be described. In this method, in order to decide whether the ith bit (i = 1, 2, ..., n) of object ID is 0 or 1, both Bloom filters $X_i$ and $Y_i$ are applied to a query feature vector q for testing whether they contain it. If $X_i$ contains the feature vector q, the ith bit of object ID is 0, and if $Y_i$ contains the feature vector q, the ith bit of object ID is 1. From this process applied to all bits of object ID, an object of the object ID finally obtained is voted. This process is done for all feature vectors obtained from the query image, and the object having the maximum number of votes is regarded as the recognition result.
The specific process will be described below.

The value of each dimension of the feature vector obtained from the query image is generally different from that of the feature vector used for compiling the database. Therefore, in the present embodiment, the allowable error range e for the value of each dimension is set to solve this problem, as in the Noguchi method. The threshold b of the number of dimensions is also utilized, and when the number of dimensions that satisfies the threshold e exceeds the threshold b, those with larger indices are adopted up to the threshold b. Then, it is determined whether the ith (i = 1, 2, ..., n) bit of object ID is 0 or 1with the set of bit vectors.

If only $X_i$ contains a query bit vector, the ith bit of object ID is 0, and if only $Y_i$ contains the query bit vector, the ith bit of object ID is 1. In the case that a query bit vector is not contained in both $X_i$ and $Y_i$, the method in the present embodiment determines that the feature vector having the bit vector as a key is not stored to the database, and discontinues the process for the subsequent bits after the ith bit.

There is a problem if a query vector is contained in both $X_i$ and $Y_i$. This problem arises, since either one of the Bloom filters has a false positive, i.e., the query vector is erroneously recognized as being stored, although it is not actually stored. In the present invention, both probabilities are considered. Specifically, the method in the present embodiment votes for both objects whose ith bit of object ID is 0 and 1. However, when the above-mentioned process is done for all bits, the number of erroneous votes increases. In the present invention, a threshold t is applied to the number of dimension of the object ID for the false positive, and the number of object ID to be voted is limited to $2^t$. When the number of dimension exceeds t, those with smaller dimension are adopted up to the threshold t.

The process described above is repeated, and the objects with the obtained object ID are voted. This process is performed for all feature vectors obtained from the query image, and the object having the maximum number of votes becomes the result of the recognition.

As in the Noguchi method, the recognizers in which the recognizer at the s stage is the one with b = s-1, are employed in order to improve efficiency of the recognition process. If the sufficient difference in the number of votes is obtained, the process is discontinued on the recognizer before the last recognizer, so that the efficient recognition process can be realized.

4-3. Error detection

The present invention also proposes a process for detecting an erroneous voting, in addition to the database constructed in the above process. In order to construct the database, not only the ordinary Bloomier filter but also a Bloomier filter for the error detection are used. This is a simple error detector for determining whether the ID obtained according to the recognition process by using the feature vector obtained from a certain query image is really voted or not.

The Bloomier filter for the error detection is formed as described below. Firstly, two Bloom filters $P_0$ and $P_1$ are prepared. When an object ID is represented by 2 bits, feature vectors obtained from an object ID having 1 in even number are stored to $P_0$, and feature vectors obtained from an object ID having 1 in odd number are stored to $P_1$. The Table Size of each Bloom filter is obtained from the equation (4).

In the recognition process, it is determined by using the Bloomier filter for the error detection whether the object having the obtained object ID is voted or not. In this case, when the feature vector is not contained in the Bloomier filter for the error detection, or when the feature vector is contained in both filters, the obtained object ID is determined to be erroneous ID, and the voting is not done.

5. Specific example of database compilation and recognition process

This section indicates the specific example of the database compilation process and the recognition process described in the previous section. For easy understanding, a number of bits and a number of feature vectors of a very small object ID are illustrated in this section. However, when the present invention is actually applied, a later-described experimental example or a database having larger scale is a subject to be processed.

5-1. Database compiling process

A process for storing a feature vector obtained from an object with an object ID of "3" to the database will be described. A Bloom filter to which the feature vector is stored is determined. It is supposed that a bit array of 10 is allocated to the object ID 3, when the object ID 3 is represented by 2 bits. In the example, because the first bit of the object ID 3 is 1, and the second bit is 0, the feature vector is stored to the Bloom filter $Y_1$ whose associated value to the first bit is 1, and to the Bloom filter $X_2$ whose associated value to the second bit is 0. 1 appears in odd number, when the object ID is represented by the bit array. Therefore, the feature vector is also stored to the Bloom filter $P_1$ for the error detection. Then, the feature vector obtained from the object with the object ID 3 is stored in accordance with the procedure illustrated in FIG. 2.

A bit vector is formed by using the first to dth dimensions of the feature vector obtained from the object with the object ID 3. When the value of each dimension of the feature vector is non-negative, it is converted into 1, and when it is negative, it is converted into 0. Specifically describing, supposing that there are feature vectors obtained from the object with the object ID 3 such as:

$$P_1 = (24, -500, 249, 32)$$
$$P_2 = (239, 123, -11, -57),$$
$$\dots$$

In the case of d = 3, the feature vectors $P_1$, $P_2$, ..., are converted into the bit vectors $u_1 = (1, 0, 1)$, $u_2 = (1, 1, 0)$, ..., in which each element of three bits from the low-order side (left side) is coded.

In this case, if the number of feature vectors converted into the same bit vector exceeds c, the feature vectors converted into this bit vector is considered to be similar, and it is considered not to be valid for the recognition. Therefore, these feature vectors are not used for the following process.

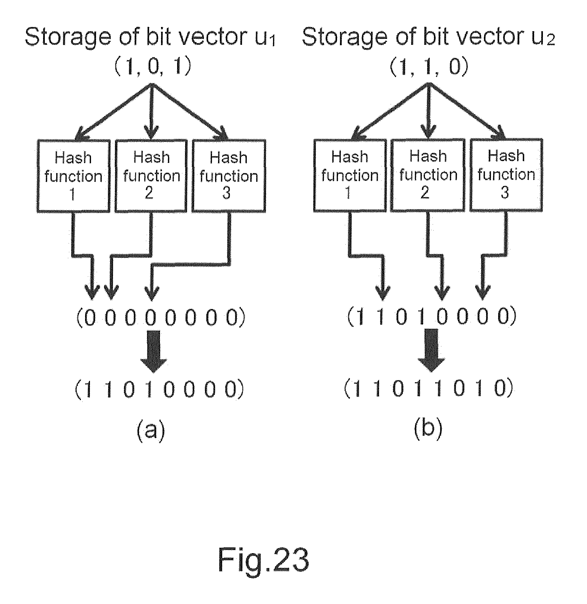

Next, k hash functions are applied to obtain k hash values with the bit vector being defined as a key. The bit of the Bloom filter corresponding to the obtained hash value is set to be 1. The subject Bloom filters are $Y_1$, $X_2$, and $P_1$ as described above, and all elements in each Bloom filter is 0 (zero) after the initialization where nothing is stored. When it is supposed that k = 3, and the Table Size of the Bloom filter is set as m = 8, the example of storing the bit vectors $u_1$ and $u_2$ is illustrated in FIG. 23.

In FIG. 23, the hash values of k=3 are obtained from the k hash functions with the bit vector $u_1$ being used as a key. When the obtained hash values are 1, 2, and 4, the first, second, and fourth bits of the Bloom filters $Y_1$, $X_2$, and $P_1$, which are initialized to (00000000), are set to 1. The $Y_1$, $X_2$, and $P_1$ after the storage of $u_1$ become (11010000) (see FIG. 23(a)).

Supposing that the hash values 2, 5, and 7 are determined from the k hash functions with the bit vector $u_2$ being used as a key. The second, fifth, and seventh bits of the vector (11010000) in the $Y_1$, $X_2$, and $P_1$ to which the $u_1$ is stored are set to be 1. The $Y_1$, $X_2$, and $P_1$ after the storage of $u_2$ become (11011010) (see FIG. 23(b)).

The above-mentioned process is repeated for all feature vectors obtained from the object with the object ID 3, and the feature vectors are stored in the Bloom filters $Y_1$, $X_2$, and $P_1$. The same process is carried out for another object with another object ID. For example, it is supposed that a bit array of 11 is allocated to an object ID 4. Since the first and second bits are both 1, all feature vectors obtained from the object with the object ID 4 are stored in the Bloom filter $Y_1$ whose associated value to the first bit is 1, the Bloom filter $Y_2$ whose associated value to the second bit is 1, and the Bloom filter $P_0$ for the error detection of the even bits. As described above, the feature vectors of each object are stored to construct the database.

5-2. Recognition process

A specific example of the recognition process will next be described. All Bloom filters are accessed by using the feature vectors obtained from the query image.

Supposing that there are feature vectors (query feature vectors) obtained from a query image such as:

$$q_1 = (31, -480, 220, 49)$$
$$q_2 = (239, 20, 113, -82),$$
$$\dots$$

In this case, bit vectors $u_1' = (1, 0, 1)$ and $u_2' = (1, 1, 1)$ are formed from the feature vectors, as in the data storage process.

$k = 3$ hash functions are applied to obtain hash values with the bit vectors being defined as a key. It is checked whether the bit of each of the Bloom filters $X_1$, $X_2$, $Y_1$, and $Y_2$, each corresponding to the bit array of the object ID, corresponding to the obtained hash value D is 1 or not. If all bits are 1, it is considered that the feature vector that is the key is stored to the corresponding Bloom filter.

Specifically describing, it is supposed that the Bloom filter $Y_1$ become (11011010).
When the hash value is obtained with respect to the bit vector $u_1'$ obtained from the feature vector q1 of the query, the hash values 1, 2, and 4, which are the same in the storage process, are obtained, since $u_1'$ assumes the value same as $u_1$ during the storage. The first, second, and fourth bits of the Bloom filter $Y_1$ are all 1. In this case, it is determined that $q_1$ is stored to the Bloom filter $Y_1$.

There may be the case in which a feature vector is erroneously determined to be stored to a Bloom filter, although it is not actually stored. It is supposed here that $q_2$ is a feature vector that is not actually stored to the Bloom filter. It is supposed that the hash values obtained from the bit vector $u_2'$ that is obtained from the $q_2$ are 2, 4, and 5. The corresponding second, fourth, and fifth bits of the Bloom filter $Y_1$ of (11011010) are all 1. As described above, there may be the case in which a feature vector, which is not actually stored, is determined to be stored due to the false positive by the Bloom filter.

The description will be continued. As described above, the retrieval process is carried out in the above-mentioned procedure for each feature vector extracted from the query, whereby it is determined what is the ith bit of the object ID. It is supposed that a certain feature vector from a query is stored to the Bloom filter $X_i$. In this case, the ith bit of the object ID is supposed to be 0. On the other hand, if it is supposed that the feature vector is stored to the Bloom filter $Y_i$, the ith bit of the object ID is supposed to be 1. If the feature vector is stored to both the $Y_i$ and $X_2$, the bit array of the object ID becomes "10", so that the object with the ID 3 is voted.

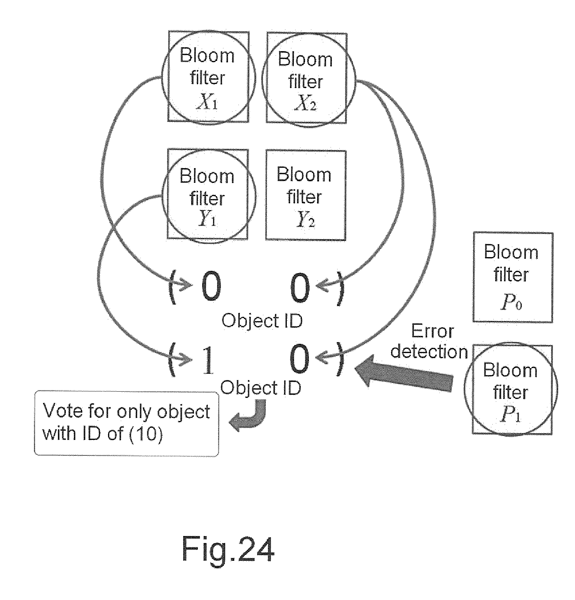

Supposing that the false positive occurs, and it is determined that the feature vector is stored to both the $X_i$ and $Y_i$. In this case, both probabilities are tested in the present invention. Specifically, for the query feature vector, an object whose ith bit of the object ID is 0 and an object whose ith bit of the object ID is 1 are both voted as illustrated in FIG. 23. For example, when it is determined that a query feature vector is stored to the $X_1$, $Y_1$, and $X_2$ as a result of the retrieval process, two ID candidates, which are 00 and 10, are prepared for the bit array of the object ID. Then, by referring to the Bloom filter for the error detection, the object ID that may well be voted is determined. Specifically, when the feature vector is stored to the Bloom filter $P_0$ for the error detection, the object having the object ID with 1 in even number, i.e., the ID "00", out of the ID candidates, is only voted. On the contrary, when the feature vector is stored to the Bloom filter $P_1$ for the error detection, the object having the object ID with 1 in odd number, i.e., the ID "10", out of the ID candidates, is only voted (see FIG. 24). Here, one example of the error detection using the Bloom filter has been illustrated. However, instead of the error detection, a known error correcting code can be applied by using plural Bloom filters. With this structure, the erroneous determination caused by the false positive can more be reduced.

The retrieval process and voting process described above are carried out for all feature vectors obtained from a query image. The object having the highest votes is finally specified as the result of the recognition.
Votes may be weighted. For example, if the number of feature vectors stored to the database and extracted from an object whose object ID is I is $N_i$, voting may be made with a weight of $1/\sqrt{N_i}$ to the votes for the object ID.

5. Experiments

In this section, a result of experiments carried out in order to verify effectiveness of the present invention will be described, wherein a data set including 55 3D objects and a data set including 5000 planar objects are used.

5-1. Experimental setting

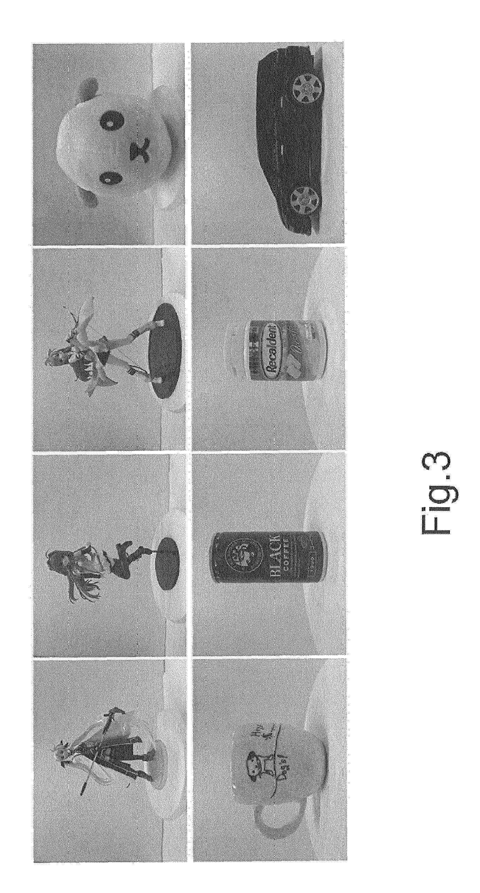

The data set of 55 3D objects will firstly be described. FIG. 3 illustrates examples of 3D objects used in the present experiment. Images were captured by rotating each object in increments of 5° from frontal view and the above diagonal 15° and 30° using a web camera. The web camera Qcam (registered trademark) Pro 9000 manufactured by Logicool Co., having resolution of 640480 was used. In these images, the images in increments of 0˚, 10˚, ..., 350˚ were utilized as images for database compilation, and the rest were utilized as query images. The number of the images for database compilation was 108 per object, which were 36 images in three directions (36 x 3). In total, about 1.2 million feature vectors were extracted from all images for the database compilation.

Next, the data set of 5,000 planar objects will be described. In the present experiment, 5,000 images in total were prepared as the images for the database compilation, which were 1667 images collected using Google image search with keywords of " magazine", "poster", "cover", etc., 1667 images that had been available at the site of PCA-SIFT, and 1666 images collected using Flicker, which was a photo-sharing site, with tags of "animal", "birthday", "food", "japan", etc.

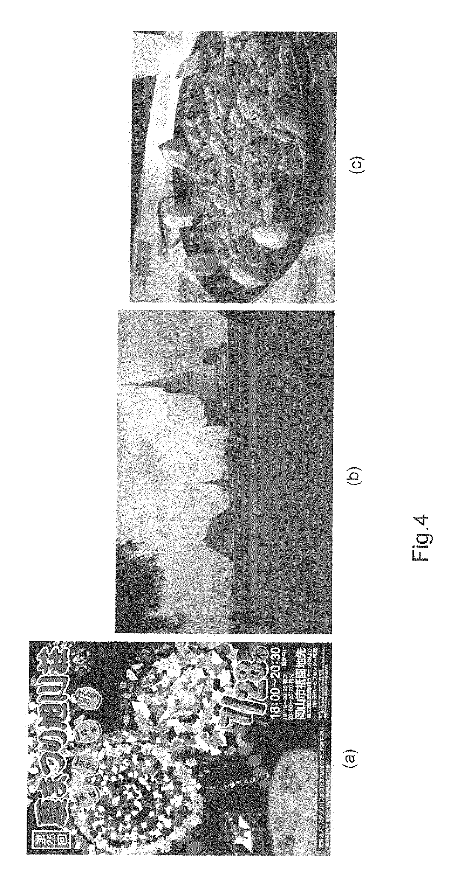

FIG. 4 illustrates examples. During the collection, the images having a size of 600 x 600 pixels or less were deleted, and the images were resized to make their longest side less than 640 pixels. The images from which 100 or less feature vectors were extracted were excluded. The number of feature vectors extracted from an image for the database compilation was about ten million. The query images were prepared as described below. 500 Images were randomly collected from images contained in the database, i.e., 100 images collected using Google image search, 200 images from PCA-SIFT site, and 200 images collected using Flicker. These images were printed by using a color laser printer (C5200n manufactured by Oki Data Corporation) on A4 sheets, and the resultants were captured by a camera (EOS Kiss Digital, manufactured by Canon K.K., with 6.3 million pixels, attached lens: EF-S 18-55 mm USM).

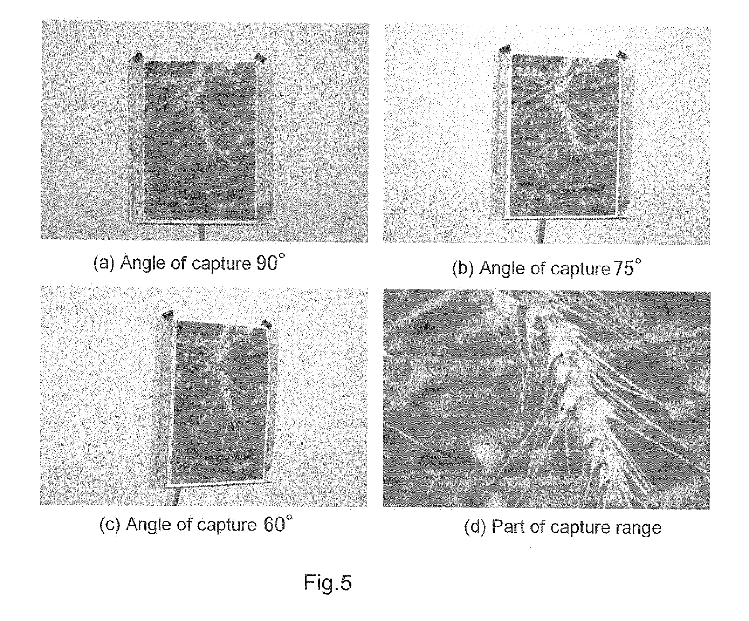

FIG. 5 illustrates examples of the captured images. As illustrated in FIG. 5, an angle θ of an optical axis of the camera with respect to the sheet is changed as 90˚, 75˚, and 60˚ at angle of view in which the whole sheet was captured. A part of the sheet was captured at an angle of 90˚. Therefore, four images in total were obtained per one sheet. The sizes of the obtained images were reduced to 512 x 341 1 pixels, and then, PCA-SIFT was applied to extract feature vectors.

In the experiments, the recognition rate of an object, an average processing time taken for the recognition of one query image, and memory amount required for the recognition were compared, when object recognition was carried out by using the method of the present invention and the Noguchi method. It is to be noted that the processing time does not contain the time for extracting the feature vectors.

In the present experiments, the recognition rate of an object was examined, wherein parameters such as the limit b of the number of dimensions for testing both bit vectors, the length c of hash, and the number d of dimensions of the bit vectors were changed. The tested ranges were as follows: b = 0, 1, ..., 10, c = 1, 2, .., 10, and d = 24, 28. In both experiments, the allowable error range e of a feature vector was 200. A computer with AMD Opterons8378 2.4 GHz CPU and 128 GB RAM. was used.

5-2. Experiment 1: Experimental results for 55 3D objects

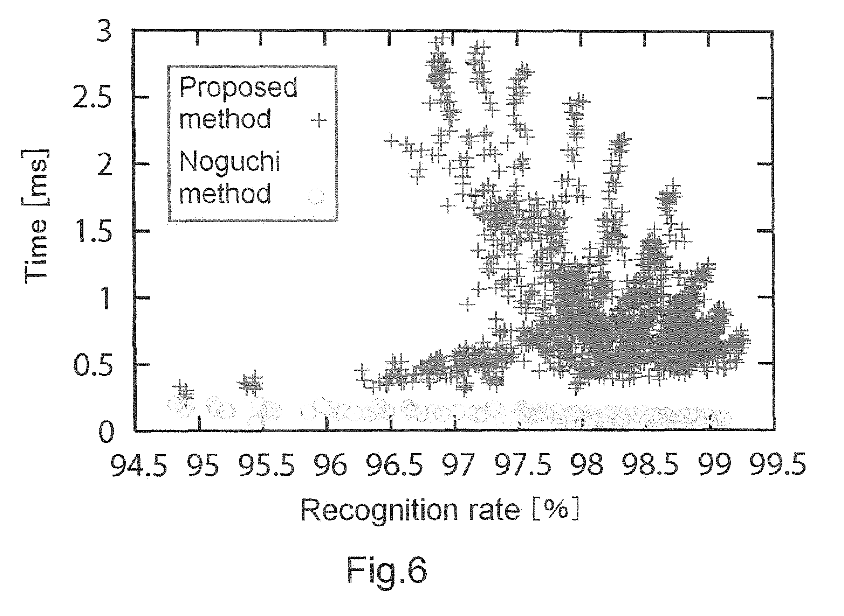

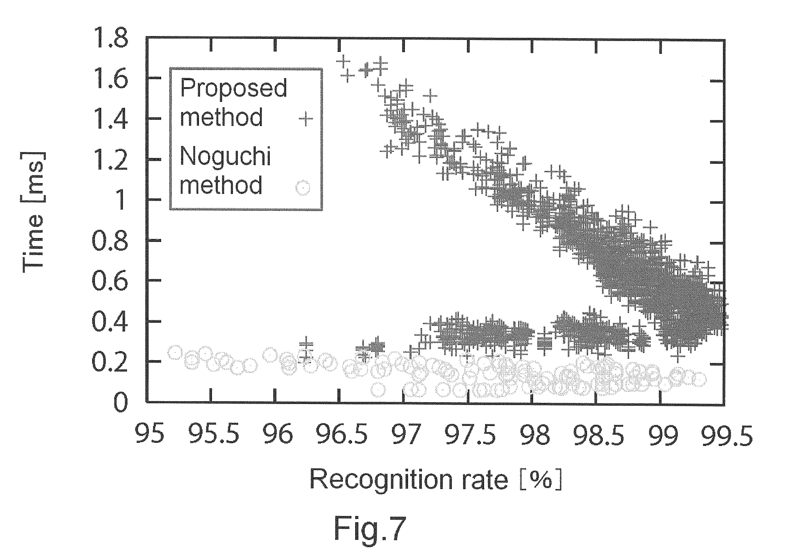

In the method according to the present invention, the recognition rate of the object was tested, wherein a storage capacity a of the feature vector and the number t of dimensions for the false positive were changed in addition to the parameters mentioned above. The ranges of a and t were as follows: a = 8, 16, 24, 32, and t = 1, 2, 3, 4, 5. The hash size of the hash table for the Noguchi method was $H_{size}$ = 2d. FIG. 6 illustrates the result with d = 24, and FIG. 7 illustrates the result with d = 28. The horizontal and the vertical axes indicate the recognition rate and the processing time, respectively.

From the experimental results illustrated in FIGS. 6 and 7, it was confirmed that, when the b increased, the recognition rate was enhanced, but when b increased too much, the recognition rate was deteriorated, which might increase the processing time. This is considered to be caused because the problem in variation of the feature vector can be solved by b, but when b increases too much, the erroneous votes increases to reduce the recognition rate, and the increased number of times of voting causes the increased processing time.

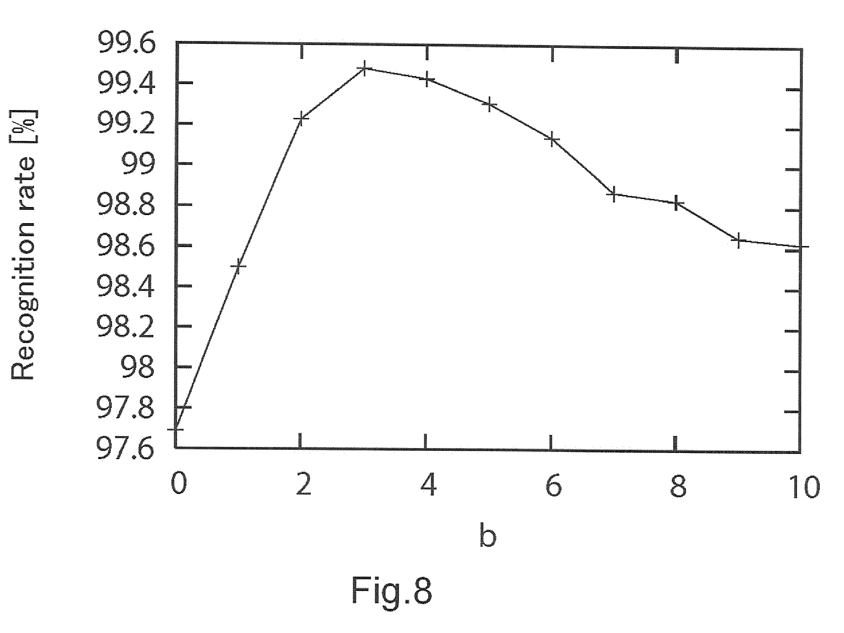

FIG. 8 illustrates the result of comparison of the recognition rate, when b is changed. The parameters used here were c = 8, and t = 2, at which the highest recognition rate was achieved with a = 8 and d = 28. It was found from the experimental results that, although much more time was taken for the recognition of one image in the present method compared to the Noguchi method, the object recognition rate with the present invention was slightly better than that with the Noguchi method. This is because as follows. Object IDs for voting for one query vector q are decided by accessing the hash table only once in the Noguchi method. On the other hand, it is necessary for the method according to the present invention to access 2n Bloom filters in order to determine them.

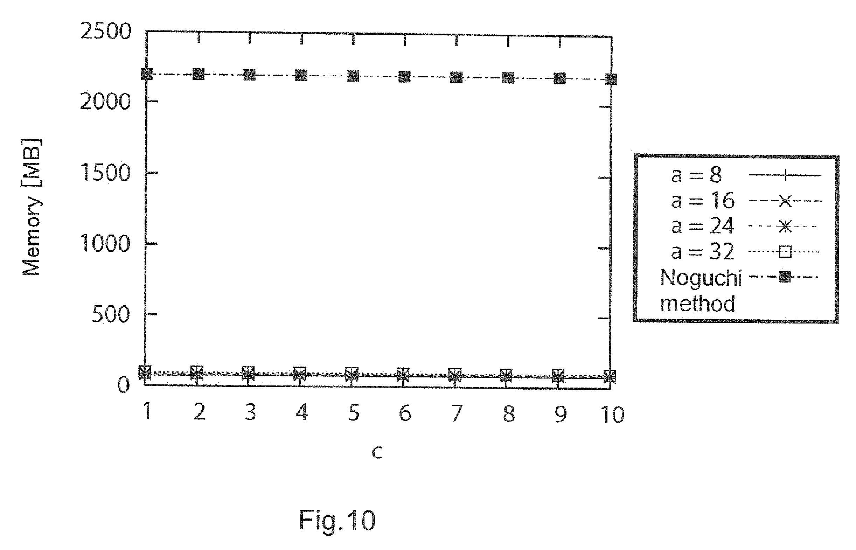

FIGS. 9 and 10 illustrate the experimental results of the comparison in the amount of memory required for the recognition process between the method of the present invention in which the parameter a was changed and the Noguchi method, by changing the parameter c. The horizontal and the vertical axes indicate the parameter c and the memory amount, respectively.

It was found from the experimental results shown in FIGS. 9 and 10 that the space efficiency with the method of the present invention was better than that with the Noguchi method. This is because almost all parts of the memory are used for the entry to the hash table in the Noguchi method.

From the above result, the recognition rate and the memory amount are more excellent in the method of the present invention than in the Noguchi method, although the processing time for the recognition is longer than that in the Noguchi method.

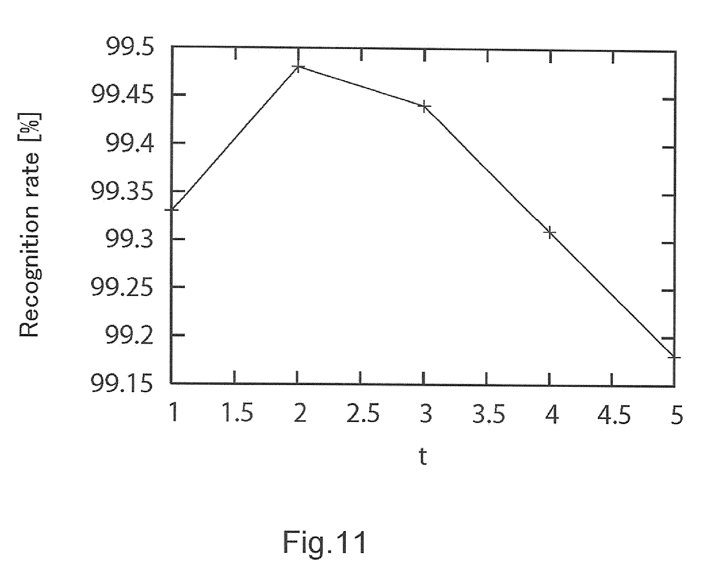

Finally, in the method of the present invention, the object recognition rates were compared by changing t. In the experiment, parameters such as b = 3 and c = 8 were applied, at which the highest recognition rate was achieved with a = 8 and d = 28. FIG. 11 illustrates the results. It was found from the result that, when t increased, the object recognition rate was enhanced, but when t increased too much, the recognition rate was deteriorated. This is because the erroneous votes increase by the increased t.

5-3. Experiment 2: Experimental results for 5,000 planar objects

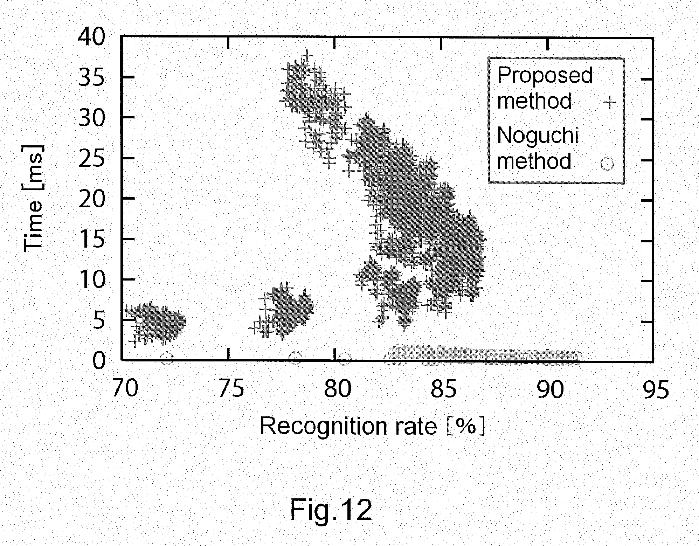

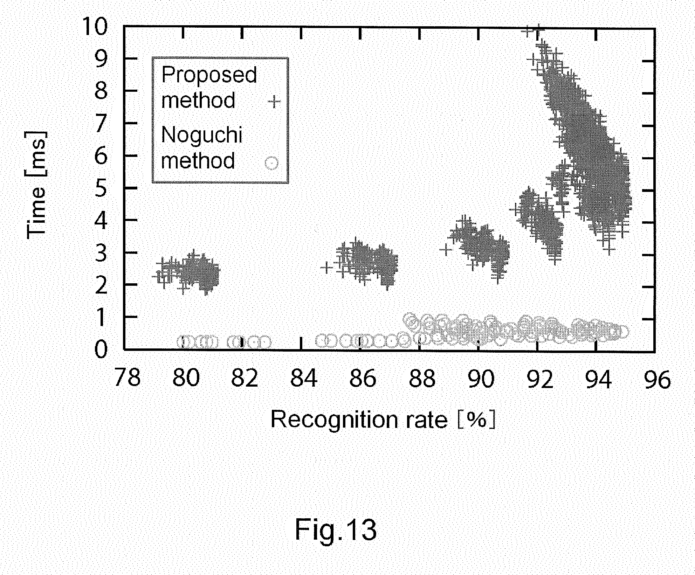

Like the experiment 1, the object recognition rate was tested by changing parameters a and t in addition to the parameters mentioned in the Section 5.1. The tested ranges of the parameters were the same as those in the Experiment 1. The size of the hash table used for the Noguchi method was the same as in the Experiment 1. FIG. 12 shows the result with d = 24, and FIG. 13 shows the result with d = 28. The horizontal and the vertical axes indicate the recognition rate and the average processing time taken for recognition of one image, respectively. Like the Experiment 1, it was found from the result that, when b increased, the object recognition rate was enhanced, but when b increased too much, the recognition rate was deteriorated, and a longer processing time was required.

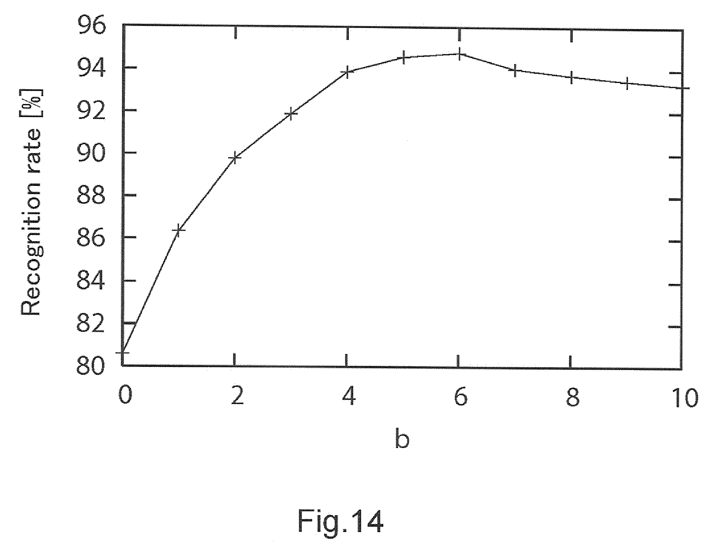

FIG. 14 illustrates the result of the comparison of the recognition rate by changing b. In the experiment, parameters such as c = 2 and t = 3 were applied, at which the highest recognition rate was achieved with a = 8 and d = 28. It was found from the experimental result that the method of the present invention was inferior to the Noguchi method with respect to the processing time, particularly with respect to the results of d = 24. However, the method of the present invention was slightly better than the Noguchi method in the recognition rate with respect to the result with d = 28. The reason why the recognition rate and the processing time were inferior to those of the Noguchi method is considered as follows. Feature vectors are converted into the same bit vector at a high rate during the retrieval process, and hence, the difference in the votes between the subject object and the other object is not so large during the voting process.

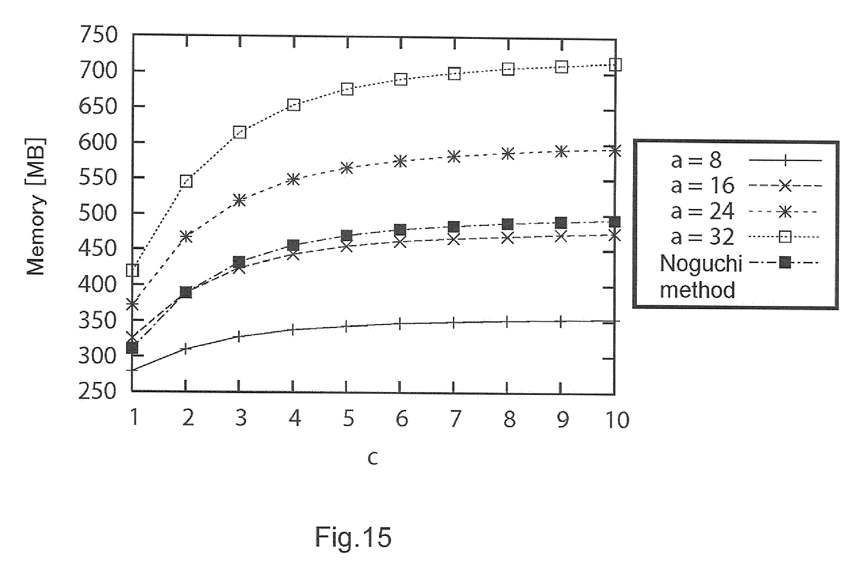

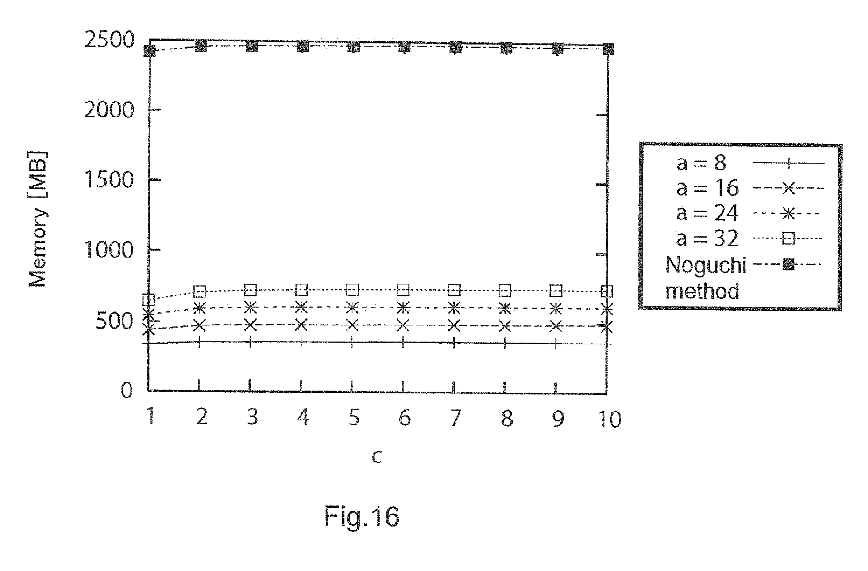

FIGS. 15 and 16 illustrate, for each d, the comparison result of the memory amount required for the recognition process by changing the parameter c between the method of the present invention in which the parameter a was changed and the Noguchi method. The horizontal axis indicates the parameter c, and the vertical axis indicates the memory amount.

It was found from the experimental results illustrated in FIGS. 15 and 16 that the memory amount required for the recognition becomes larger in the method of the present invention than in the Noguchi method with a = 24 and 32, with the result of d = 24. However, it was also found that the space efficiency in the method of the present invention was far better than that in the Noguchi method with the result of d = 28. The reason why the memory amount increases with d = 24, a = 24 and 32 is considered as follows. In the method of the present invention, n Bloom filters have to be employed for one feature vector.

A comparison was made when the required memory of the method of the present invention was almost the same as that of the Noguchi method. The method of the present invention with d = 28 and a = 8, 16, the Noguchi method with d = 24 as a comparative method 1, and the Noguchi method with d = 28 and $H_{size} = 2^{24}$-1 were focused. For these three methods, the difference in the recognition rate and the processing time was tested by changing b and c. In the method of the present invention, the parameter t was also changed as t = 1, 2, 3, 4, and 5.

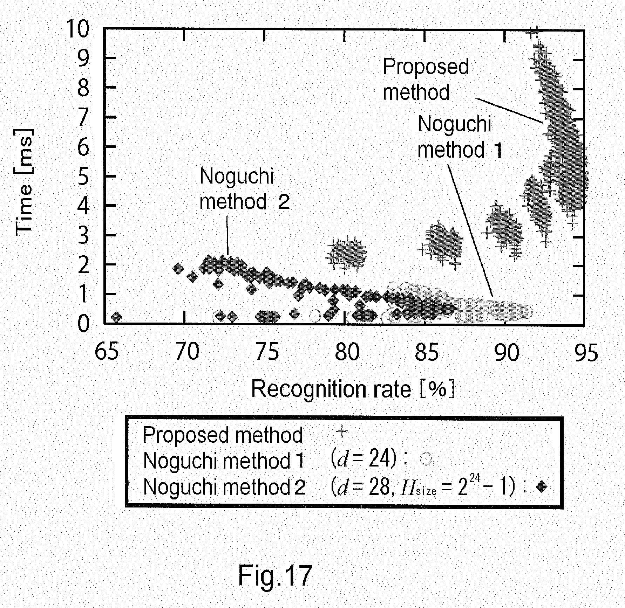

FIG. 17 illustrates the result. The horizontal axis indicates the recognition rate, and the vertical axis indicates the average processing time for the recognition of one image. It was found from the result that the method according to the present invention took more processing time than in the Noguchi method, but it could enhance the recognition rate with the parameters. Accordingly, it can be said that the method of the present invention is successful to compress the representation of feature vectors.

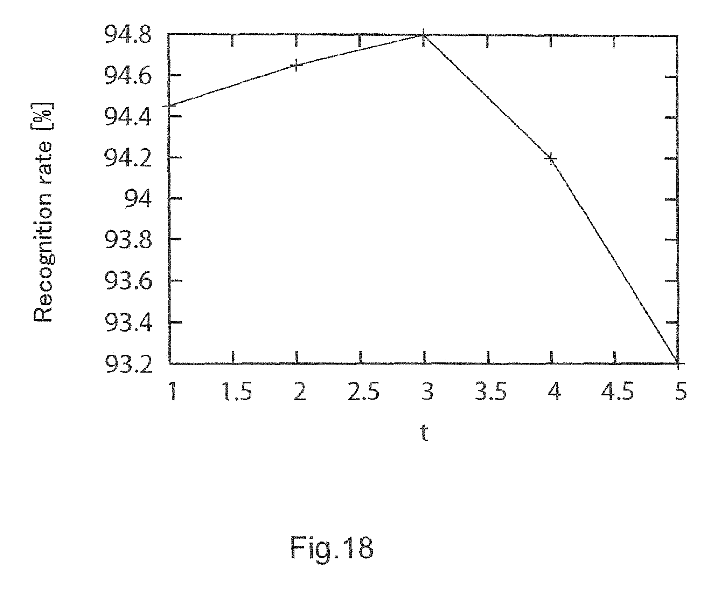

Finally, in the method of the present invention, the recognition rates were compared by changing the parameter t. In this Experiment, the parameters such as b = 6, and c = 2 at which the highest recognition rate was attained with a = 8 and d = 28 were employed. FIG. 18 illustrates the experimental results. It was found that, as in the Experiment 1, when t increased, the object recognition rate was enhanced, but when t increased too much, the recognition rate was deteriorated.

5-4. Effect of error detection

Finally, the recognition rate in case of using the Bloomier filter for the error detection and the recognition rate in case of not using the Bloomier filter for the error detection were compared by changing the parameters b and t, in order to test the effectiveness of the Bloomier filter for the error detection. The parameters with the highest recognition rate were used in the experiment of changing the parameter b and in the experiment of changing the parameter t, respectively.

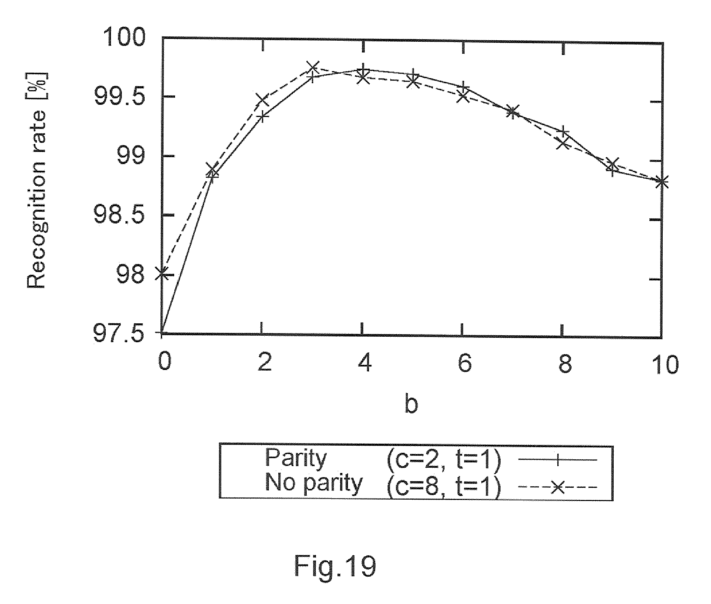

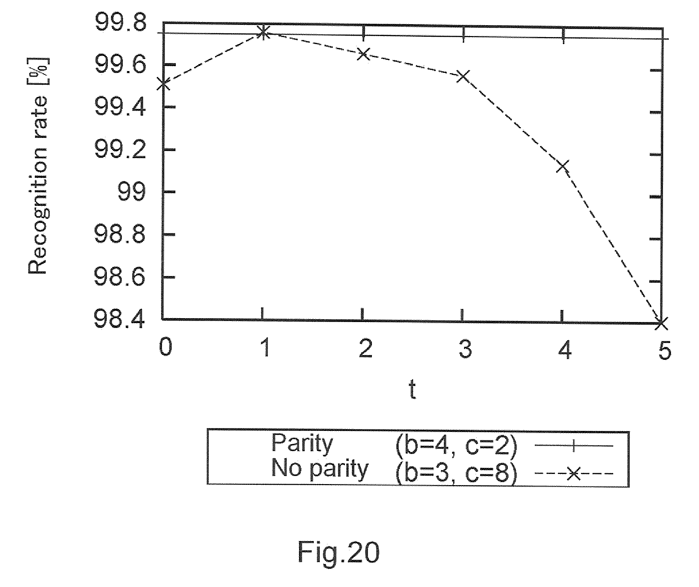

The Experiment for 55 objects will firstly be described. Table 1 illustrates the used parameters, FIG. 19 illustrates the experimental result for b, and FIG. 20 illustrates the experimental result for t.

It was found from the experimental results in FIGS. 19 and 20 that, as both the parameters b and t were increased, the recognition rate was improved, but if they were increased too much, the recognition rate was deteriorated. This is considered as follows. As the values were increased, the erroneous votes were also increased. It was also found from the experimental results that, when the parameter t was changed, the erroneous votes were prevented due to the detection of the erroneous votes in the Bloomier filter for the error detection, so that the recognition rate higher than that with no Bloomier filter for the error detection was realized. Accordingly, it can be said that the application of the Bloomier filter for the error detection is effective.

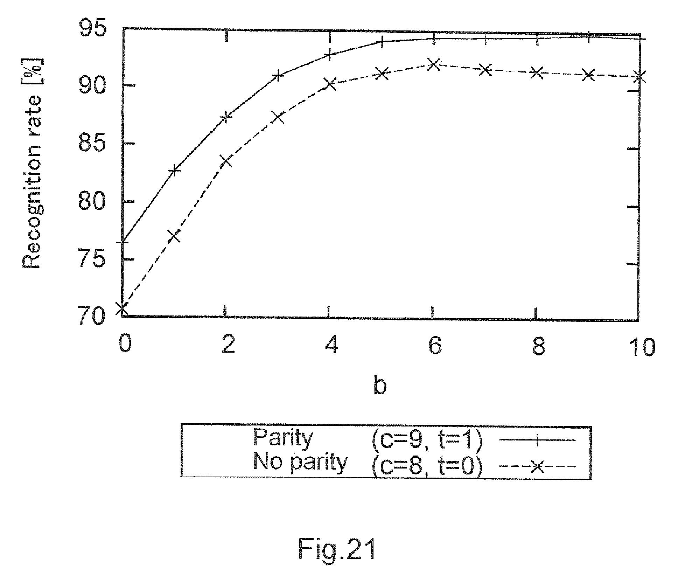

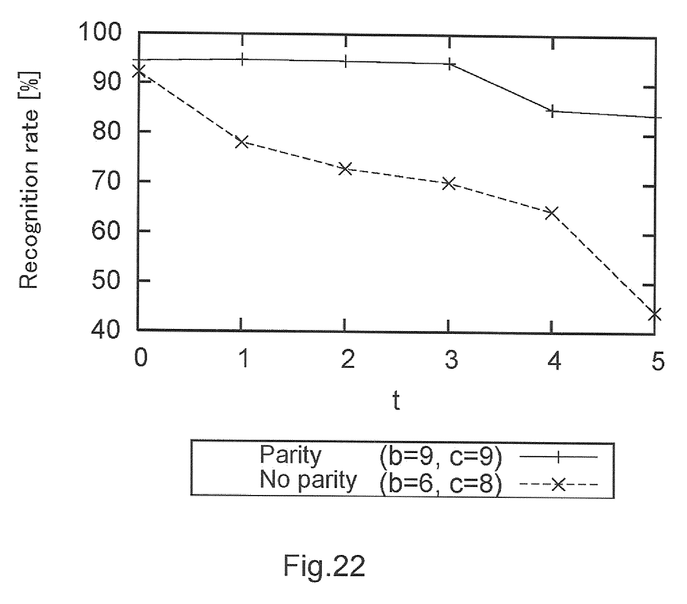

The result for the planar objects will next be described. In this Experiment, 10,000 objects, not 5,000 objects, were used. Table 2 illustrates the used parameters, FIG. 21 illustrates the experimental result for b, and FIG. 22 illustrates the experimental result for t. As in the Experiment for 55 objects, it was found that, as both the parameters b and t were increased, the recognition rate was improved, but if they were increased too much, the recognition rate was deteriorated. It was also found from the experimental results that the recognition rate with the Bloomier filter for the error detection was higher than that with no Bloomier filter for the error detection. Accordingly, it can be said that the application of the Bloomier filter for the error detection is effective.

Various modifications are possible for the present invention in addition to the above-mentioned embodiments. These modifications should not be considered as not belonging to the scope of the present invention. The present invention should include the equivalents of the claims and all modifications within the scope of the invention.

**INDUSTRIAL APPLICABILITY**

Nearest neighbor search of feature vectors representing local features is often employed for specific object recognition. In such a method, it is required to store many feature vectors to match them by distance calculation. The number of feature vectors is, in general, so large that a huge amount of memory is needed for their storage. A way to solve this problem is to skip the distance calculation of feature vectors.

The present invention proposes a method of reducing a memory amount without distance calculation, wherein the method is to use a Bloomier filter, which is far memory efficient than hash tables, for storage and matching of feature vectors. From experiments of planar and 3D specific object recognition, the present invention is evaluated in comparison to a method with a hash table.

**EXPLANATION OF NUMERALS**

1     Image database

**Claims**

**1.** A compiling method of an image database used for object recognition, the method comprising the steps of:

an extracting step for extracting a plurality of feature vectors from an image formed by capturing an object to be stored into an image database, an n bit of identifier (n is a natural number) being previously assigned to the object and each feature vector representing a local feature of the image, and
a storing step for storing each feature vector into the image database using a set of data structures, each data structure admitting a false positive in compensation for reduced memory amount and returning a value showing whether specified data is stored to the data structure or not, so that the identifier of the object is associated with the feature vector extracted therefrom, wherein
the set of data structures has at least 2 by n identifier data structures, each identifier data structure corresponding to zero value and one value of each bit of the identifier,
the storing step stores each feature vector into the identifier data structures of either zero value or one value of each bit according to the object from which the feature vector is extracted,
the image database is accessed by a computer to execute, when an image showing an object is given as a query, a recognition process that examines whether the same object as the query is stored in the image database or not, wherein
the recognition process comprises steps of: extracting a plurality of feature vectors as query vectors from the query, testing whether the corresponding feature vector to each query vector is stored in the identifier data structures or not, and in case where the corresponding feature vector is stored in either zero value or one value of every bit of the identifier data structures, finding an identifier that relates to the query vector according to a stored value of each bit, so that the query is associated with the most strongly related identifier based on the sum of the tests on each query vector.

2. A compiling method of an image database according to claim 1, wherein each data structure admits a false positive in order to reduce an amount of memory storing data.

3. A compiling method of an image database according to claim 1 or claim 2, wherein
the storing step applies a predetermined rule so as to obtain a value for an error detection involved with the identifier, and stores the obtained value to the data structure for the error detection, and
the recognition step compares the obtained identifier and the value stored to the data structure for the error detection, and when they agree with each other, the recognition step uses the determination result about the query vector for the sum of the tests, while if they do not agree with each other, it does not use the determination result for the sum of the tests.

4. A compiling method of an image database according to claim 3, wherein
the value for the error detection includes at least one bit, and
the data structure for the error detection includes a data structure for a storage of zero value of every bit, and a data structure for a storage of one value of every bit.

5. A compiling method of an image database according to any one of claims 2 to 4, wherein
when the number of bits, by which it is determined that the same query vector is stored in both the data structure for the zero value and the data structure for the one value due to the false positive, exceeds a predetermined number, the recognition step excludes the determination result involved with the query vector from the sum of the tests.

6. A compiling method of an image database according to any one of claims 1 to 5, wherein
the recognition step gives a predetermined point to the value of the identifier that is determined to be related to the query vector, while it does not give a point to any identifiers when there is no identifier that is determined to be related to the query vector, and
determines the identifier with the highest points based upon the sum of the tests for the query vectors extracted from the query.

7. A compiling method of an image database according to any one of claims 1 to 6, wherein
the data structure is a Bloom filter.

8. A compiling apparatus of an image database used for object recognition, the apparatus comprising:

an extracting unit for extracting a plurality of feature vectors from an image formed by capturing an object to be stored into an image database, an n bit of identifier (n is a natural number) being previously assigned to the object and each feature vector representing a local feature of the image,
a data structure unit that includes a set of data structures, each data structure admitting a false positive in compensation for reduced memory amount and returning a value, showing whether specified data is stored to the data structure or not, and
a storing unit for storing each feature vector into the data structure unit in such a manner that the identifier previously assigned to the object is associated with the feature vector extracted therefrom, wherein
the data structure unit has at least 2 by n identifier data structures, each identifier data structure corresponding to zero value and one value of each bit of the identifier,
the storing unit stores each feature vector into the identifier data structures of either zero value or one value of each bit according to the object from which the feature vector is extracted,
the image database is accessed by a recognition apparatus that, when an image showing an object is given as a query, examines whether the same object as the query is stored in the image database or not, and
the recognition apparatus extracts a plurality of feature vectors as query vectors from the query, tests whether the corresponding feature vector to each query vector is stored in the identifier data structures or not, and in case where the corresponding feature vector is stored in either zero value or one value of every bit of the identifier data structures, finds an identifier that relates to the query vector according to a stored value of each bit, so that the query is associated with the most strongly related identifier based on the sum of the tests on each query vector.

9. A compiling program of an image database used for object recognition, the program allowing a computer to execute steps of:

an extracting step for extracting a plurality of feature vectors from an image formed by capturing an object to be stored into an image database, an n bit of identifier (n is a natural number) being previously assigned to the object and each feature vector representing a local feature of the image, and

a storing step for storing each feature vector into the image database using a set of data structures, each data structure admitting a false positive in compensation for reduced memory amount and returning a value showing whether specified data is stored to the data structure or not, so that the identifier of the object is associated with the feature vector extracted therefrom, wherein

the set of data structures has at least 2 by n identifier data structures, each identifier data structure corresponding to zero value and one value of each bit of the identifier,

the storing step stores each feature vector into the identifier data structures of either zero value or one value of each bit according to the object from which the feature vector is extracted,

the image database is accessed by the computer or another computer to execute, when an image showing an object is given as a query, a recognition process that examines whether the same object as the query is stored in the image database or not, wherein

the recognition process comprises steps of: extracting a plurality of feature vectors as query vectors from the query, testing whether the corresponding feature vector to each query vector is stored in the identifier data structures or not, and in case where the corresponding feature vector is stored in either zero value or one value of every bit of the identifier data structures, finding an identifier that relates to the query vector according to a stored value of each bit, so that the query is associated with the most strongly related identifier based on the sum of the tests on each query vector.

Fig.1

Feature vector (Hash key)
(200, -305, 5, ▪ ▪ ▪ , -31)

| Hash function 1 | Hash function 2 | ▪ ▪ ▪ | Hash function $k$ |

Hash value 1     4    ▪ ▪ ▪    2

$m$ bit

| | Bloom filter Before | | | Bloom filter After |
|---|---|---|---|---|
| 1 | 0 | | 1 | 1 |
| 2 | 0 | | 2 | 1 |
| 3 | 0 | | 3 | 0 |
| 4 | 0 | | 4 | 1 |
| ▪ | | | ▪ | |
| ▪ | | | ▪ | |
| ▪ | | | ▪ | |
| $m$ | 0 | | $m$ | 0 |

Fig.2

Fig.3

(a)　　　　　　　　　　(b)　　　　　　　　　　(c)

Fig.4

(a) Angle of capture 90°

(b) Angle of capture 75°

(c) Angle of capture 60°

(d) Part of capture range

Fig.5

Fig.6

EP 2 442 273 A1

Fig.7

EP 2 442 273 A1

Fig.8

Fig.9

EP 2 442 273 A1

Fig.10

Fig.11

Fig.12

EP 2 442 273 A1

Fig.13

Fig.14

EP 2 442 273 A1

Fig.15

Fig.16

EP 2 442 273 A1

Fig.17

Fig.18

EP 2 442 273 A1

Fig.19

EP 2 442 273 A1

Fig.20

Fig.21

EP 2 442 273 A1

Fig.22

41

Storage of bit vector $u_1$ (1, 0, 1)

Storage of bit vector $u_2$ (1, 1, 0)

| Hash function 1 | Hash function 2 | Hash function 3 |
|---|---|---|

(0 0 0 0 0 0 0 0)

(1 1 0 1 0 0 0 0)

(a)

| Hash function 1 | Hash function 2 | Hash function 3 |
|---|---|---|

(1 1 0 1 0 0 0 0)

(1 1 0 1 1 0 1 0)

(b)

Fig.23

Fig.24

<div style="text-align:center">**INTERNATIONAL SEARCH REPORT**</div>

| | International application No. |
|---|---|
| | PCT/JP2010/059352 |

**A. CLASSIFICATION OF SUBJECT MATTER**
*G06T7/00*(2006.01)i, *G06F17/30*(2006.01)i, *G06T1/00*(2006.01)i

According to International Patent Classification (IPC) or to both national classification and IPC

**B. FIELDS SEARCHED**

Minimum documentation searched (classification system followed by classification symbols)
G06T7/00, G06F17/30, G06T1/00

Documentation searched other than minimum documentation to the extent that such documents are included in the fields searched
Jitsuyo Shinan Koho          1922–1996   Jitsuyo Shinan Toroku Koho   1996–2010
Kokai Jitsuyo Shinan Koho   1971–2010   Toroku Jitsuyo Shinan Koho   1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Hiroya MINAMI, "WWW ni Okeru Bunsan Caching Gijutsu", NTT Gijutsu Journal, 01 May 2000 (01.05.2000), vol.12, no.5, pages 59 to 62 | 1-9 |
| A | BERNARD et al., The Bloomier filter: an efficient data structure for static support lookup tables, Proceedings of the fifteenth annual ACM-SIAM symposium on Discrete algorithms, 2004, p.30-39 | 1-9 |
| A | Kazuto NOGUCHI, et al., "Efficient Recognition of Specific Objects by Cascading Approximate Nearest Neighbor Searchers", Meeting on Image Recognition and Understanding (MIRU2007) Ronbunshu, 30 July 2007 (30.07.2007), pages 111 to 118 | 1-9 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 June, 2010 (28.06.10) | 13 July, 2010 (13.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

# EP 2 442 273 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008026414 A

### Non-patent literature cited in the description

- **D. Lowe.** Distinctive Image Features from Scale-Invariant Keypoints. *International Journal of Computer Vision,* 2004, vol. 60 (2), 91-110
- **Kazuto Noguchi ; Koichi Kise ; Masakazu Iwamura.** Efficient Recognition of Objects by Cascading Approximate Nearest Neighbor Searches. *Meeting on Image Recognition and Understanding (MIRU2007),* 2007, vol. OS-B2-02, 111-118
- **K. Kise ; K. Noguchi ; M. Iwamura.** Memory Efficient Recognition of Specific Objects with Local Features. *Proc. Of the 19th International Conference of Pattern Recognition (ICPR2008) WeAT3.1,* 2008
- **Katsufumi Inoue ; Hiroshi Miyake ; Koichi Kise.** A Memory Reduction Method for 3D Object Recognition based on Local Descriptors - An Approach by Selecting Local Descriptors. *Meeting on Image Recognition and Understanding (MIRU2008), OS15-3,* 2008, 363-370
- **Takayuki Hondo ; Koichi Kise.** Inspection of Memory Reduction Methods for Specific Object Recognition ~ Approaches by Quantization and Selection of Local Features~. *Technical Report of The Institute of Electronics, Information, and Communication Engineers,* 2009, vol. 108 (484), 171-176
- **B. Chazelle ; J. Kilian ; R. Rubinfeld ; A. Tal.** The Bloomier Filter: An Efficient Data Structure for Static Support Lookup Table. *Proc. 15th Annual ACM-SIAM SODA,* 2004, 30-39
- **F. Fraundorfer ; H. Stewenius ; D. Nister.** A Binning Scheme for Fast Hard Drive Based Image Search. *Proc. of CVPR2007,* 2007, 1-6
- **Noritaka Himei ; Toshikazu Wada.** Approximate nearest neighbor search algorithm on HDD based on B+ tree. *IEICE,* 2009, vol. 108 (484), 223-228
- **Y. Ke ; R. Sukthankar.** PCA-SIFT: A more distinctive representation for local image descriptors. *Proc. Of CVPR2004,* 2004, vol. 2, 506-513
- **B. H. Bloom.** Space/Time Trade-offs in Hash Coding with Allowable Errors. *Commun. ACM,* 1970, vol. 13 (7), 422-426

45